# EUROPEAN PATENT SPECIFICATION

(11) **EP 4 186 661 B1**
(45) Date of publication and mention of the grant of the patent: **12.11.2025**
(21) Application number: 21846805.6
(22) Date of filing: 21.07.2021
(51) Int. Cl.: B26D 1/04, H01M 4/04, B26D 7/06, B26D 7/26, B26D 1/06, B26D 1/08, B26D 1/00

(54) **CARTRIDGE-TYPE ELECTRODE CUTTING DEVICE**
PATRONENARTIGE ELEKTRODENSCHNEIDEVORRICHTUNG
DISPOSITIF DE COUPE D'ÉLECTRODES DE TYPE À CARTOUCHE

(30) Priority: 24.07.2020 KR 20200092584
(43) Date of publication of application: 31.05.2023
(73) Proprietor: LG Energy Solution, Ltd., Seoul 07335 (KR)
(72) Inventor: LEE, Hyeon Jin, Daejeon 34122 (KR); JANG, Eung Jin, Daejeon 34122 (KR); PARK, Sin Young, Daejeon 34122 (KR); PARK, Dong Hyeuk, Daejeon 34122 (KR); KIM, Sang Wook, Daejeon 34122 (KR)
(74) Representative: Goddar, Heinz J.
(86) International application number: PCT/KR2021/009388
(87) International publication number: WO 2022/019637

(56) References cited:
- EP-B1- 2 409 819
- JP-A- 2013 123 783
- JP-A- 2015 057 056
- KR-A- 20140 009 015
- KR-A- 20160 052 063
- KR-A- 20160 052 063
- KR-B1- 101 115 299
- KR-B1- 102 031 214
- KR-B1- 102 040 777
- KR-B1- 102 040 777
- US-A1- 2012 103 152
- US-A1- 2019 091 959

## Description

### [Technical Field]

This application claims the benefit of priority to Korean Patent Application No. 2020-0092584 filed on July 24, 2020.

The present invention relates to a cartridge type electrode cutting apparatus, and more particularly to a cartridge type electrode cutting apparatus configured to be separately assembled and mounted to a main body, wherein clearance and parallelism between an upper cutter and a lower cutter of the electrode cutting apparatus are capable of being set and adjusted in advance, whereby consistent electrode cutting quality is maintained.

### [Background Art]

A lithium secondary battery, which is capable of being charged and discharged, has been widely used as an energy source for wireless mobile devices or wearable devices, which are worn on bodies, and has also been used as an energy source for electric vehicles and hybrid electric vehicles presented as alternatives to existing gasoline and diesel vehicles, which cause air pollution.

The lithium secondary battery includes an electrode assembly including a stack of a positive electrode plate coated with a positive electrode active material, a negative electrode plate coated with a negative electrode active material, and a separator located between the positive electrode plate and the negative electrode plate, the separator being configured to prevent short circuit, the separator being configured such that lithium ions (Li-ion) are movable therethrough, a battery case configured to receive the electrode assembly, and an electrolytic solution injected into the battery case such that the lithium ions are movable.

In general, the positive electrode plate and the negative electrode plate may be manufactured through a process of coating a long sheet type positive electrode sheet and a long sheet type negative electrode sheet with a positive electrode active material and a negative electrode active material, respectively, drying and rolling the active materials, and cutting the positive electrode sheet and the negative electrode sheet to a predetermined size to manufacture unit electrodes.

A conventional electrode plate cutting apparatus configured to manufacture the unit electrodes includes a feeding unit configured to feed an electrode plate in a state of being seated and a cutter installed at one side of the feeding unit. The cutter is divided into an upper cutter and a lower cutter. Specifically, based on the electrode plate, the upper cutter is fixed to the upper side of the electrode plate and the lower cutter is installed at the lower side of the electrode plate, and the upper cutter is moved downwards or the lower cutter is moved upwards at an electrode plate cutting position. When the electrode plate is fed to the cutting apparatus, therefore, the edge of the upper cutter and the edge of the lower cutter come into contact with each other to cut the electrode plate.

When the cutting process using the upper cutter and the lower cutter is repeatedly performed, however, the edges of the upper cutter and the lower cutter are worn and the edges of the upper cutter and the lower cutter are curved, whereby the electrode plate is cut in the state in which a cut section is not smooth or a burr is generated.

In addition, if installation surfaces of the upper cutter and the lower cutter do not coincide with each other, work must be performed after the cutters are repeatedly ground. In this case, clearance between the upper cutter and the lower cutter is gradually increased due to a decrease in width of the cutters, which causes damage to the edges of the cutters and increases the amount of foreign matter, whereby the electrode assembly is defective.

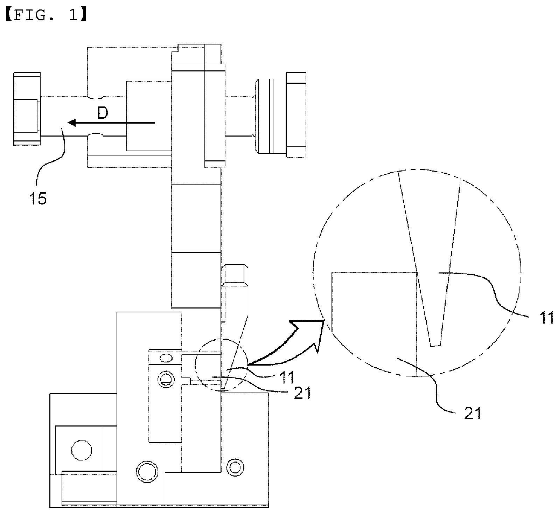

In connection therewith, FIG. 1, which is a side view of a conventional electrode cutting apparatus, shows a portion of an electrode cutting apparatus having a link type assembly structure in which individual components of an upper unit and a lower unit are directly fastened to a main frame step by step.

Referring to FIG. 1, the conventional electrode cutting apparatus uses a system in which an upper cutter 11 and a lower cutter 21 are aligned using a side pressure, whereby the upper cutter 11 is inclined due to the side pressure D and a difference in distance between a side pressure axis and an end of the upper cutter 11. Accordingly, an upper frame is pushed in a direction opposite the side pressure using a headless bolt 15 in order to prevent inclination of the upper cutter 11. However, a process of minutely adjusting the fastening distance of the headless bolt is complicated, takes much time, and provides unsatisfactory results.

Patent Document 1 discloses an electrode plate cutting apparatus including a support frame portion, to which a lower cutter holder having a lower cutter fixed thereto is fastened, a moving frame portion, to which an upper cutter holder having an upper cutter fixed thereto is fastened and which is moved upwards and downwards, a driving portion configured to move the moving frame portion upwards and downwards, a pusher portion configured to fix an electrode plate when cutting work is performed using the upper cutter and the lower cutter, the pusher portion including an upper grip and a lower grip.

In the electrode plate cutting apparatus of Patent Document 1, the lower cutter holder and the upper cutter holder are fastened to the support frame portion and the moving frame portion, respectively. The lower cutter holder and the lower cutter are coupled to the support frame portion, and the upper cutter holder and the upper cutter are coupled to the moving frame portion. The electrode plate cutting apparatus of Patent Document 1 has a problem in that management within a tolerance range is difficult using a method of minutely controlling a plurality of fastening structures in order to maintain uniform clearance and parallelism between the upper cutter and the lower cutter.

KR20140009015A discloses a cartridge type electrode cutting apparatus configured for being detachably attached to a main body, the electrode cutting apparatus comprising:an upper unit configured to be disposed above an electrode sheet;a lower unit configured to be disposed under the electrode sheet; and a guide portion configured to couple and fix the upper unit and the lower unit to each other and to guide upward and downward movement of the upper unit,wherein the upper unit comprises an upper cutter configured to cut the electrode sheet, an upper holder to which the upper cutter is fixed, and an upper frame to which the upper holder is mounted, and wherein the lower unit comprises a lower cutter configured to cut the electrode sheet and a lower frame to which the lower cutter is fixed.

Therefore, there is a need to develop an electrode cutting apparatus capable of cutting an electrode so as to have a smoothly cut surface while easily adjusting clearance and parallelism between an upper cutter and a lower cutter and cutting the electrode with uniform quality.

### (Prior Art Document)

(Patent Document 1) Korean Registered Patent Publication No. 1115299 (2012.02.06)

### [Disclosure]

### [Technical Problem]

The present invention has been made in view of the above problems, and it is an object of the present invention to provide a cartridge type electrode cutting apparatus configured to be separately assembled before being mounted to a main body by disposing and fixing an upper unit including an upper cutter and a lower unit including a lower cutter using a guide portion, wherein clearance and parallelism between the upper cutter and the lower cutter are easily adjusted and the electrode cutting apparatus is easily mounted to the main body.

### [Technical Solution]

In order to accomplish the above object, an electrode cutting apparatus according to the present invention, which is a cartridge type electrode cutting apparatus configured for being detachably attached to a main body, includes an upper unit configured to be disposed above an electrode sheet, a lower unit configured to be disposed under the electrode sheet, and a guide portion configured to couple and fix the upper unit and the lower unit to each other and to guide upward and downward movement of the upper unit, wherein the upper unit includes an upper cutter configured to cut the electrode sheet, an upper holder to which the upper cutter is fixed, and an upper frame to which the upper holder is mounted, and the lower unit includes a lower cutter configured to cut the electrode sheet and a lower frame to which the lower cutter is fixed. The guide portion is configured so that a clearance and a parallelism between the upper cutter and the lower cutter are set in a state in which the guide portion is not completely fixed, and wherein the guide portion is configured so that the guide portion is completely fixed after the setting of the clearance and the parallelism is completed, and wherein the electrode cutting apparatus is configured for being mounted to the main body by a sliding fastening.

The electrode cutting apparatus according to the present invention may further include a moving unit configured to transmit power to the upper unit.

In the electrode cutting apparatus according to the present invention, the electrode sheet may be disposed between the upper unit and the lower unit, and the upper cutter may be downwardly moved so as to be adjacent to the front surface of the lower cutter in order to cut the electrode sheet.

The electrode cutting apparatus according to the present invention may further include a gripper located at respective front parts of the upper cutter and the lower cutter, the gripper being configured to guide movement of the electrode sheet.

In the electrode cutting apparatus according to the present invention, the upper cutter may be configured to have a double-edged structure in which a central portion of the upper cutter is short and opposite ends of the upper cutter are long.

In the electrode cutting apparatus according to the present invention, the electrode cutting apparatus may be configured for being mounted to the main body in the state in which a clearance and a parallelism between the upper cutter and the lower cutter are set to predetermined values.

In the electrode cutting apparatus according to the present invention, the upper frame and the lower frame are directly or indirectly coupled to the main body.

In the electrode cutting apparatus according to the present invention, a handle may be attached to one end of the electrode cutting apparatus in a major-axis direction.

### [Advantageous Effects]

As is apparent from the above description, a cartridge type electrode cutting apparatus according to the present invention is configured to be separately assembled in advance before being mounted to a main body, whereby it is possible to accurately and easily adjust clearance and parallelism between an upper cutter and a lower cutter in the assembly process.

Since the electrode cutting apparatus is mounted to the main body in the state in which setting and inspection in clearance and parallelism between the upper cutter and the lower cutter are completed in advance, as described above, it is possible to manage electrodes cut so as to have consistent quality.

In addition, since the electrode cutting apparatus is assembled using a method of completely fixing a guide portion after the clearance and parallelism between the upper cutter and the lower cutter are set in advance, it is possible to simplify an assembly process, and therefore it is possible to minimize accumulated tolerance, compared to the case in which the electrode cutting apparatus is assembled while the guide portion is complexly fixed from the beginning.

In addition, it is possible to prevent an electrode mixture layer from being separated from the cut surface of an electrode cut using the electrode cutting apparatus according to the present invention, whereby it is possible to reduce an electrode defect rate, and it is not necessary to readjust the positions of the upper cutter and the lower cutter during an electrode cutting operation, whereby it is possible to increase electrode production speed.

### [Description of Drawings]

FIG. 1 is a side view of a conventional electrode cutting apparatus.
FIG. 2 is a perspective view of an electrode cutting apparatus according to the present invention.
FIG. 3 is a vertical sectional view of FIG. 2.
FIG. 4 is a front view of the electrode cutting apparatus of FIG. 2 to which a moving unit is added.
FIG. 5 is a perspective view of the electrode cutting apparatus of FIG. 4 to which a gripper is added.
FIG. 6 is a perspective view showing the state before the electrode cutting apparatus is mounted to a main body.
FIG. 7 is a perspective view showing the state in which the electrode cutting apparatus is mounted to the main body.
FIG. 8 is a perspective view showing the state in which the electrode cutting apparatus of FIG. 5 is attached to a portion of the main body.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but rather means that such elements may be further included unless mentioned otherwise.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Embodiments of the present invention will be described in detail with reference to the accompanying drawings.

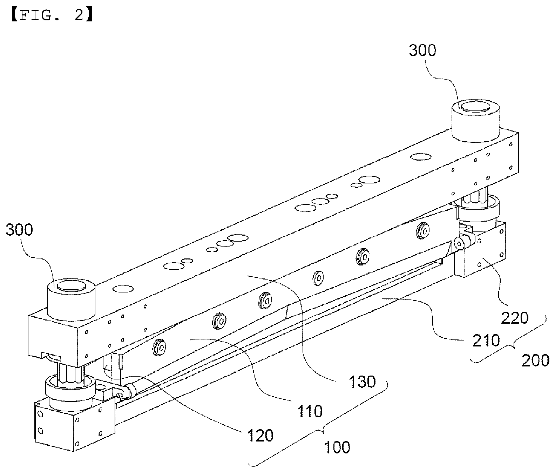

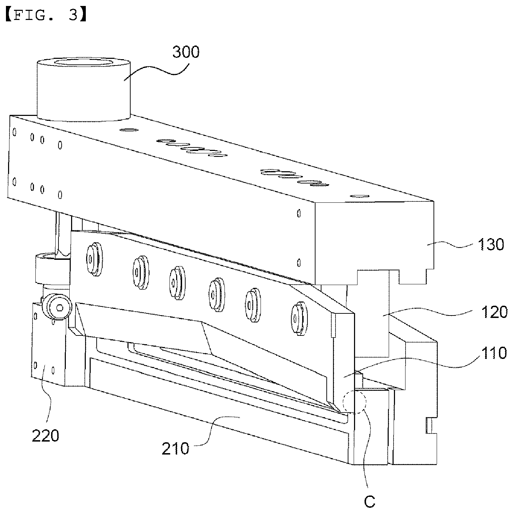

FIG. 2 is a perspective view of an electrode cutting apparatus according to the present invention, and FIG. 3 is a vertical sectional view of FIG. 2.

Referring to FIGS. 2 and 3, the electrode cutting apparatus according to the present invention, which is a cartridge type electrode cutting apparatus capable of being detachably attached to a main body, includes an upper unit 100, a lower unit 200, and a guide portion 300 configured to couple and fix the upper unit 100 and the lower unit 200 to each other.

When an electrode sheet is fed by a feeding roller, the main body is synchronized with feeding speed of the electrode sheet and is moved in a feeding direction of the electrode sheet. When relative speed between the main body and the electrode sheet in the feeding direction becomes 0, the upper unit is moved upwards and downwards to cut the electrode sheet.

Subsequently, when the main body returns to a work start position, 1 cycle is completed, and the electrode sheet is cut while the cycle is repeated.

The upper unit 100 is disposed above an electrode sheet for cutting (not shown), the lower unit 200 is disposed under the electrode sheet for cutting, and the guide portion 300 performs a function of guiding upward and downward movement of the upper unit 100.

The upper unit 100 includes an upper cutter 110 configured to cut the electrode sheet, an upper holder 120 to which the upper cutter 110 is fixed, and an upper frame 130 to which the upper holder 120 is mounted.

The lower unit 200 includes a lower cutter 210 configured to cut the electrode sheet and a lower frame 220 to which the lower cutter 210 is fixed.

The electrode sheet is disposed between the upper unit 100 and the lower unit 200. The upper cutter 110 may be downwardly moved so as to be adjacent to the front surface of the lower cutter 210 in order to cut the electrode sheet.

Referring to FIG. 3, when the upper cutter 110 is moved downwards, there is formed no clearance C between the lower cutter 210 and the upper cutter 110. Specifically, the clearance may be 0.

The upper unit 100 and the lower unit 200 are assembled and coupled to each other using the guide portion 300. The guide portion 300 is disposed at each of opposite ends of the upper unit 100 and the lower unit 200, and clearance and parallelism between the upper cutter 110 and the lower cutter 210 are set in the state in which the guide portion 300 is not completely fixed to the upper unit 100.

Parallelism indicates the extent to which the outer surface of the upper cutter and the outer surface of the lower cutter are parallel to each other. When the outer surface of the upper cutter and the outer surface of the lower cutter are in parallel to each other, the parallelism is 0.

In a concrete example, the upper frame 130 is provided with a penetrated portion, through which the guide portion 300 extends, and the lower frame 220 is provided with a recess, into which the guide portion 300 is inserted and fixed. The guide portion 300 is fastened to the recess formed in the lower frame 220 first, and very precise tolerance is provided to the assembly surface at which the guide portion 300 and the lower frame 220 are coupled to each other. That is, the guide portion may be assembled to the lower frame so as to be very ideally perpendicular thereto.

In the state in which the upper cutter and the lower cutter are disposed in completely tight contact with each other and the guide portion is perpendicular to the lower frame, therefore, a process of injecting an adhesive between the guide portion 300 and the penetrated portion of the upper frame such that bonding is achieved therebetween may be performed in order to finally fix the guide portion.

In a setting process, the positions of the upper cutter and the lower cutter are set in the state in which the guide portion is not completely fixed, and the guide portion is finally fixed after setting is completed, as described above, and therefore it is possible to reduce a danger of tolerance occurrence for each step, compared to setting and adjustment in position of the upper cutter and the lower cutter while individual components are assembled step by step. Consequently, it is possible to more easily and accurately perform the setting process.

In a concrete example, the upper cutter 110 may have a double-edged structure in which a central portion of the upper cutter is short and opposite ends of the upper cutter are long. For example, the lower part of the upper cutter may have a curved arch shape when viewed in a plan view or a bent polygonal structure when viewed in a plan view.

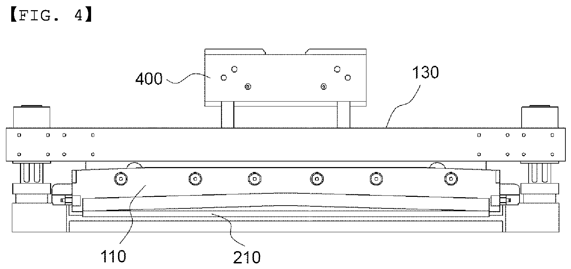

FIG. 4 is a front view of the electrode cutting apparatus of FIG. 2 to which a moving unit is added.

Referring to FIG. 4, the electrode cutting apparatus according to the present invention includes a moving unit 400 connected to the upper frame 130.

The moving unit 400 performs a function of transmitting power necessary for upward and downward movement of the upper frame 130 and a function of preventing occurrence of tolerance in clearance between the upper cutter 110 and the lower cutter 210.

Specifically, the electrode sheet is cut in the state in which the clearance between the upper cutter 110 and the lower cutter 210 is accurately adjusted. As the number of cuttings is increased, tolerance occurs in the adjusted clearance between the upper cutter 110 and the lower cutter 210, and the tolerance may deviate from a permitted limit.

In the present invention, as described above, the moving unit is further disposed at a central portion of the upper frame in order to guarantee straightness in upward and downward movement of the upper cutter 110, whereby distortion of the upper cutter 110 may be prevented, and therefore uniform force of cutting the electrode sheet may be maintained.

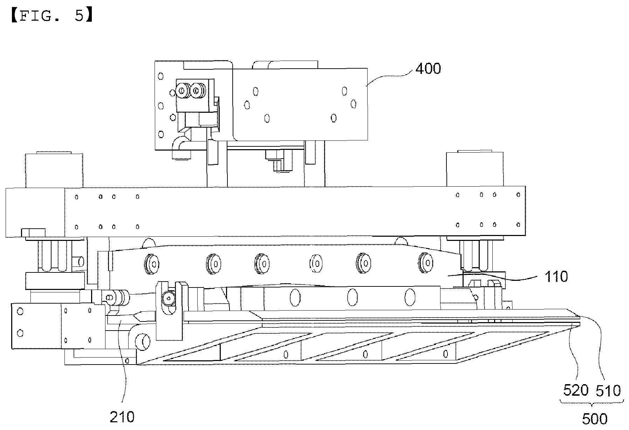

FIG. 5 is a perspective view of the electrode cutting apparatus of FIG. 4 to which a gripper is added.

Referring to FIG. 5, a gripper 500 configured to guide feeding of the electrode sheet is attached to the front parts of the upper cutter 110 and the lower cutter 210. Specifically, the gripper 500 may be coupled to the lower frame, or may be directly coupled to the main body.

The gripper 500 includes a pair of a first gripper 510 and a second gripper 520 disposed respectively at the upper surface and the lower surface of the electrode sheet.

The clearance between the first gripper 510 and the second gripper 520 may be reduced so as to grip the electrode sheet. Alternatively, the clearance between the first gripper and the second gripper may be adjusted in the state in which the first gripper and the second gripper are spaced apart from each other such that cutting and feeding of the electrode sheet are continuously performed.

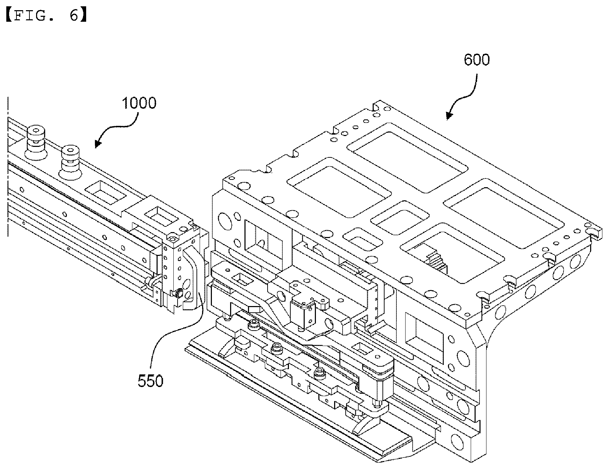

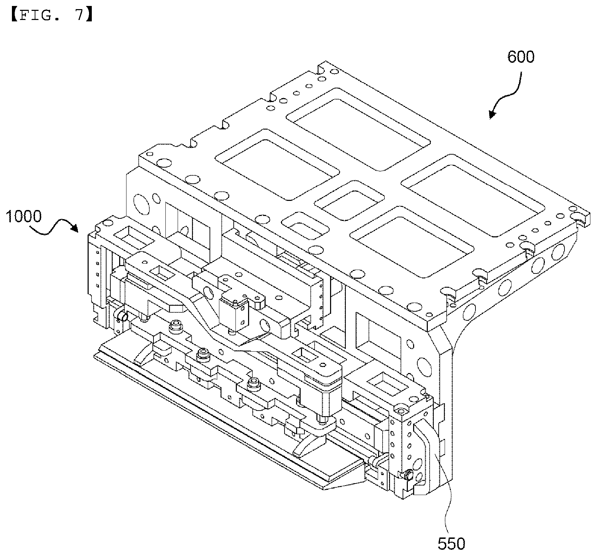

FIG. 6 is a perspective view showing the state before the electrode cutting apparatus is mounted to the main body, and FIG. 7 is a perspective view showing the state in which the electrode cutting apparatus is mounted to the main body.

Referring to FIGS. 6 and 7, the electrode cutting apparatus 1000 is mounted to the main body 600 by sliding fastening. Specifically, clearance and parallelism between the upper cutter and the lower cutter are set to predetermined values before the electrode cutting apparatus 1000 is mounted to the main body 600, and the electrode cutting apparatus is mounted to the main body after assembly between the upper unit and the lower unit is completed.

For sliding fastening of the electrode cutting apparatus, a handle 550 is attached to one end of the electrode cutting apparatus 1000 in a major-axis direction.

In a process in which the cutting apparatus is fed and mounted to the main body, therefore, it is possible to prevent distortion in setting of the upper unit and the lower unit using the handle.

As described above, the present invention provides a cartridge type electrode cutting apparatus capable of being detachably attached to a main body. Consequently, the electrode cutting apparatus is easily assembled, and when the upper cutter and the lower cutter are worn, rapid replacement and maintenance are possible.

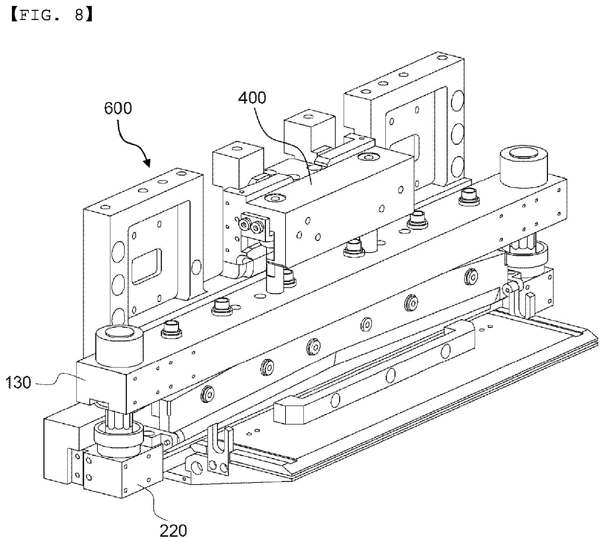

FIG. 8 is a perspective view showing the state in which the electrode cutting apparatus of FIG. 5 is attached to a portion of the main body.

Referring to FIG. 8, each of the upper frame 130, which is coupled with the upper holder having the upper cutter attached thereto, and the lower frame 220, which is coupled with the lower cutter, is coupled to a portion of the main body 600.

That is, as shown in FIGS. 6 and 7, the lower frame 220 of the electrode cutting apparatus mounted to the main body by sliding fastening may be coupled to the lower part of the main body 600, and the upper frame 130 may be directly coupled to the central portion of the main body 600 or may be indirectly coupled to the main body 600 via the moving unit 400 coupled to the upper frame 130.

In the present invention, as described above, the electrode cutting apparatus, which is separately assembled, is mounted to the main body in order to cut the electrode sheet, wherein the electrode cutting apparatus is mounted to the main body in the state in which clearance between the upper cutter and the lower cutter is adjusted and parallelism therebetween is set in advance. Consequently, it is possible to reduce a danger of tolerance occurrence for each step, compared to conventional adjustment of set values in each step while individual components constituting the upper unit and the lower unit are assembled to the main body step by step, whereby it is possible to achieve process simplification.

Those skilled in the art to which the present invention pertains will appreciate that various applications and modifications are possible within the category of the present invention based on the above description.

### (Description of Reference Symbols)

15: Headless bolt
100: Upper unit
11, 110: Upper cutters
120: Upper holder
130: Upper frame
200: Lower unit
21, 210: Lower cutters
220: Lower frame
300: Guide portion
400: Moving unit
500: Gripper
510: First gripper
520: Second gripper
550: Handle
600: Main body
1000: Electrode cutting apparatus
D: Side pressure

### [Industrial Applicability]

As is apparent from the above description, a cartridge type electrode cutting apparatus according to the present invention is configured to be separately assembled in advance before being mounted to a main body, whereby it is possible to accurately and easily adjust clearance and parallelism between an upper cutter and a lower cutter in the assembly process.

Since the electrode cutting apparatus is mounted to the main body in the state in which setting and inspection in clearance and parallelism between the upper cutter and the lower cutter are completed in advance, as described above, it is possible to manage electrodes cut so as to have consistent quality.

In addition, since the electrode cutting apparatus is assembled using a method of completely fixing a guide portion after the clearance and parallelism between the upper cutter and the lower cutter are set in advance, it is possible to simplify an assembly process, and therefore it is possible to minimize accumulated tolerance, compared to the case in which the electrode cutting apparatus is assembled while the guide portion is complexly fixed from the beginning.

In addition, it is possible to prevent an electrode mixture layer from being separated from the cut surface of an electrode cut using the electrode cutting apparatus according to the present invention, whereby it is possible to reduce an electrode defect rate, and it is not necessary to readjust the positions of the upper cutter and the lower cutter during an electrode cutting operation, whereby it is possible to increase electrode production speed.

## Claims

1. A cartridge type electrode cutting apparatus (1000) configured for being detachably attached to a main body (600), the electrode cutting apparatus comprising:
an upper unit (100) configured to be disposed above an electrode sheet;
a lower unit (200) configured to be disposed under the electrode sheet; and
a guide portion (300) configured to couple and fix the upper unit (100) and the lower unit (200) to each other and to guide upward and downward movement of the upper unit (100),
wherein the upper unit (100) comprises an upper cutter (110) configured to cut the electrode sheet, an upper holder (120) to which the upper cutter (110) is fixed, and an upper frame (130) to which the upper holder (120) is mounted, and
wherein the lower unit (200) comprises a lower cutter (210) configured to cut the electrode sheet and a lower frame (220) to which the lower cutter (210) is fixed,
wherein the guide portion (300) is configured so that a clearance and a parallelism between the upper cutter (110) and the lower cutter (210) are set in a state in which the guide portion (300) is not completely fixed, and
wherein the guide portion (300) is configured so that the guide portion (300) is completely fixed after the setting of the clearance and the parallelism is completed, and
wherein the electrode cutting apparatus (1000) is configured for being mounted to the main body (600) by a sliding fastening.

2. The electrode cutting apparatus (1000) according to claim 1, further comprising a moving unit (400) configured to transmit power to the upper unit (100).

3. The electrode cutting apparatus (1000) according to claim 1, wherein the electrode sheet is disposed between the upper unit (100) and the lower unit (200), and
wherein the upper cutter (110) is downwardly moved so as to be adjacent to a front surface of the lower cutter (210) in order to cut the electrode sheet.

4. The electrode cutting apparatus (1000) according to claim 1, further comprising a gripper (500) located at respective front parts of the upper cutter (110) and the lower cutter (210), the gripper (500) being configured to guide movement of the electrode sheet.

5. The electrode cutting apparatus (1000) according to claim 1, wherein the upper cutter (110) is configured to have a double-edged structure in which a central portion of the upper cutter (110) is short and opposite ends of the upper cutter (110) are long.

6. The electrode cutting apparatus (1000) according to claim 1, wherein the electrode cutting apparatus (1000) is configured for being mounted to the main body (600) in a state in which the guide portion (300) is completely fixed so that a clearance and a parallelism between the upper cutter (110) and the lower cutter (210) are set to predetermined values.

7. The electrode cutting apparatus (1000) according to claim 1, wherein a handle is attached to one end of the electrode cutting apparatus (1000) in a major-axis direction.

## Patentansprüche

1. Kartuschenartige Elektrodenschneidvorrichtung (1000), die konfiguriert ist, um abnehmbar an einem Hauptkörper (600) angebracht zu werden, wobei die Elektrodenschneidvorrichtung Folgendes umfasst:
eine obere Einheit (100), die konfiguriert ist, um über einer Elektrodenplatte angeordnet zu werden;
eine untere Einheit (200), die konfiguriert ist, um unter der Elektrodenplatte angeordnet zu werden; und
einen Führungsabschnitt (300), der konfiguriert ist, um die obere Einheit (100) und die untere Einheit (200) miteinander zu koppeln und zu fixieren und um die Aufwärts- und Abwärtsbewegung der oberen Einheit (100) zu führen,
wobei die obere Einheit (100) eine obere Schneideinrichtung (110), die konfiguriert ist, um die Elektrodenplatte zu schneiden, einen oberen Halter (120), an dem die obere Schneideinrichtung (110) fixiert ist, und einen oberen Rahmen (130), an dem der obere Halter (120) montiert ist, umfasst, und
wobei die untere Einheit (200) eine untere Schneideinrichtung (210), die konfiguriert ist, um die Elektrodenplatte zu schneiden, und einen unteren Rahmen (220), an dem die untere Schneideinrichtung (210) fixiert ist, umfasst,
wobei der Führungsabschnitt (300) so konfiguriert ist, dass ein Abstand und eine Parallelität zwischen der oberen Schneideinrichtung (110) und der unteren Schneideinrichtung (210) in einem Zustand eingestellt sind, in dem der Führungsabschnitt (300) nicht vollständig fixiert ist, und
wobei der Führungsabschnitt (300) so konfiguriert ist, dass der Führungsabschnitt (300) vollständig fixiert ist, nachdem das Einstellen des Abstands und der Parallelität abgeschlossen ist, und
wobei die Elektrodenschneidvorrichtung (1000) konfiguriert ist, um an dem Hauptkörper (600) durch eine Gleitbefestigung montiert zu werden.

2. Elektrodenschneidvorrichtung (1000) nach Anspruch 1, ferner umfassend eine Bewegungseinheit (400), die konfiguriert ist, um Leistung an die obere Einheit (100) zu übertragen.

3. Elektrodenschneidvorrichtung (1000) nach Anspruch 1, bei der die Elektrodenplatte zwischen der oberen Einheit (100) und der unteren Einheit (200) angeordnet ist, und
bei der die obere Schneideinrichtung (110) nach unten bewegt wird, um an eine vordere Oberfläche der unteren Schneideinrichtung (210) anzugrenzen, um die Elektrodenplatte zu schneiden.

4. Elektrodenschneidvorrichtung (1000) nach Anspruch 1, ferner umfassend einen Greifer (500), der an jeweiligen vorderen Teilen der oberen Schneideinrichtung (110) und der unteren Schneideinrichtung (210) angeordnet ist, wobei der Greifer (500) konfiguriert ist, um die Bewegung der Elektrodenplatte zu führen.

5. Elektrodenschneidvorrichtung (1000) nach Anspruch 1, bei der die obere Schneideinrichtung (110) konfiguriert ist, um eine doppelkantige Struktur aufzuweisen, bei der ein zentraler Abschnitt der oberen Schneideinrichtung (110) kurz ist und gegenüberliegende Enden der oberen Schneideinrichtung (110) lang sind.

6. Elektrodenschneidvorrichtung (1000) nach Anspruch 1, bei der die Elektrodenschneidvorrichtung (1000) konfiguriert ist, um an dem Hauptkörper (600) in einem Zustand montiert zu werden, in dem der Führungsabschnitt (300) vollständig fixiert ist, so dass ein Abstand und eine Parallelität zwischen der oberen Schneideinrichtung (110) und der unteren Schneideinrichtung (210) auf vorbestimmte Werte eingestellt sind.

7. Elektrodenschneidvorrichtung (1000) nach Anspruch 1, bei der ein Griff an einem Ende der Elektrodenschneidvorrichtung (1000) in einer Hauptachsenrichtung angebracht ist.

## Revendications

1. Dispositif de coupe d'électrodes de type à cartouche (1000) configuré pour être fixé de manière amovible à un corps principal (600), le dispositif de coupe d'électrodes comprenant :
une unité supérieure (100) configurée pour être disposée au-dessus d'une feuille d'électrode ;
une unité inférieure (200) configurée pour être disposée au-dessous de la feuille d'électrode ; et
une partie de guidage (300) configurée pour coupler et fixer l'unité supérieure (100) et l'unité inférieure (200) l'une à l'autre et pour guider le déplacement ascendant et descendant de l'unité supérieure (100),
dans lequel l'unité supérieure (100) comprend un élément de coupe supérieur (110) configuré pour couper la feuille d'électrode, un support supérieur (120) auquel l'élément de coupe supérieur (110) est fixé, et un cadre supérieur (130) auquel le support supérieur (120) est monté, et
dans lequel l'unité inférieure (200) comprend un élément de coupe inférieur (210) configuré pour couper la feuille d'électrode et un cadre inférieur (220) auquel est fixé l'élément de coupe inférieur (210),
dans lequel la partie de guidage (300) est configurée de telle sorte qu'un jeu et un parallélisme entre l'élément de coupe supérieur (110) et l'élément de coupe inférieur (210) sont réglés dans un état dans lequel la partie de guidage (300) n'est pas complètement fixée, et
dans lequel la partie de guidage (300) est configurée de telle sorte que la partie de guidage (300) est complètement fixée après que le réglage du jeu et du parallélisme est terminé, et
dans lequel le dispositif de coupe d'électrodes (1000) est configuré pour être monté au corps principal (600) par une fixation coulissante.

2. Dispositif de coupe d'électrodes (1000) selon la revendication 1, comprenant en outre une unité de déplacement (400) configurée pour transmettre une puissance à l'unité supérieure (100).

3. Dispositif de coupe d'électrodes (1000) selon la revendication 1, dans lequel la feuille d'électrode est disposée entre l'unité supérieure (100) et l'unité inférieure (200), et
dans lequel l'élément de coupe supérieur (110) est déplacé vers le bas de façon à être adjacent à une surface avant de l'élément de coupe inférieur (210) afin de couper la feuille d'électrode.

4. Dispositif de coupe d'électrodes (1000) selon la revendication 1, comprenant en outre un préhenseur (500) situé à des parties avant respectives de l'élément de coupe supérieur (110) et de l'élément de coupe inférieur (210), le préhenseur (500) étant configuré pour guider le déplacement de la feuille d'électrode.

5. Dispositif de coupe d'électrodes (1000) selon la revendication 1, dans lequel l'élément de coupe supérieur (110) est configuré pour avoir une structure à double tranchant dans laquelle une partie centrale de l'élément de coupe supérieur (110) est courte et des extrémités opposées de l'élément de coupe supérieur (110) sont longues.

6. Dispositif de coupe d'électrodes (1000) selon la revendication 1, dans lequel le dispositif de coupe d'électrodes (1000) est configuré pour être monté au corps principal (600) dans un état dans lequel la partie de guidage (300) est complètement fixée de telle sorte qu'un jeu et un parallélisme entre l'élément de coupe supérieur (110) et l'élément de coupe inférieur (210) sont réglés à des valeurs prédéterminées.

7. Dispositif de coupe d'électrodes (1000) selon la revendication 1, dans lequel une poignée est assujettie à une des extrémités du dispositif de coupe d'électrodes (1000) dans une direction d'axe principal.
